# EUROPEAN PATENT SPECIFICATION

(11) **EP 3 337 139 B1**
(45) Date of publication and mention of the grant of the patent: **26.02.2020**
(21) Application number: 16869816.5
(22) Date of filing: 09.10.2016
(51) Int. Cl.: H04L 29/12, H04L 29/08, G06F 9/50, G06F 9/455

(54) **METHOD, SYSTEM AND DEVICE FOR ELASTIC SCALING OF VIRTUAL RESOURCES IN CLOUD COMPUTING ENVIRONMENT**
VERFAHREN, SYSTEM UND VORRICHTUNG ZUR ELASTISCHEN SKALIERUNG VIRTUELLER RESSOURCEN IN EINER CLOUD-COMPUTERUMGEBUNG
PROCÉDÉ, SYSTÈME ET DISPOSITIF POUR MISE À L'ÉCHELLE ÉLASTIQUE DE RESSOURCES VIRTUELLES DANS UN ENVIRONNEMENT INFORMATIQUE EN NUAGE

(30) Priority: 30.11.2015 CN 201510854608
(43) Date of publication of application: 20.06.2018
(73) Proprietor: Huawei Technologies Co., Ltd., Longgang District Shenzhen, Guangdong 518129 (CN)
(72) Inventor: YE, Yun, Shenzhen Guangdong 518129 (CN); ZHANG, Nianli, Shenzhen Guangdong 518129 (CN); DUBBAKA, Sridhar, Shenzhen Guangdong 518129 (CN)
(74) Representative: Thun, Clemens
(86) International application number: PCT/CN2016/101576
(87) International publication number: WO 2017/092505

(56) References cited:
- WO-A1-2015/126430
- WO-A1-2015/176522
- CN-A- 102 244 685
- CN-A- 104 780 115
- US-A1- 2015 222 515
- US-A1- 2015 222 561

## Description

### TECHNICAL FIELD

This application relates to the field of cloud computing technologies, and in particular, to an elastic scale-up technology for a virtual resource in a cloud computing environment.

### BACKGROUND

In the field of cloud computing, a resource may be configured according to a service requirement. For example, when service traffic dramatically increases, resources (which are usually virtual machines) may be increased to serve services, to ensure normal processing of the services; when service traffic reduces, resources for serving services may be reduced, to improve effective utilization of the resources. Further, a system capacity may be dynamically divided according to service traffic, to reduce hardware costs required to maintain service running. The technology is an elastic scaling technology, and the elastic scaling technology may be used to improve fault tolerance and availability. When a service status is poor, by using the elastic scaling technology, a new instance is added to replace an undesirable node.

Currently, a basic procedure of elastic scale-up is as follows: When actual system load reaches a threshold (for example, an entire system CPU usage averaged on a node is greater than 60%), a node needs to be scaled up to support an access service. Therefore, a system capacity resource is allocated to a new node according to a requirement, software is configured on the new node, a service is enabled on the new node, and some service data is replicated to the new node. The new node supports the access service, and therefore, the new node may provide an external service. However, in the foregoing procedure, when the system capacity resource is allocated according to a requirement, the scale-up usually requires to consume a relatively long time to build a new virtual machine environment and configure an application. Because both virtual machine environment building and application configuration need to consume a relatively long time, the scaled-up added node cannot provide an external service promptly and rapidly.

US 2015/0222515 A1 discloses a management and orchestration server which manages a plurality of types of virtualized nodes included in server group that includes a scaling executing unit configured to command the server group to scale virtual machines included in each of the plurality of types of virtualized nodes, a traffic load measuring unit configured to manage a traffic load of each of the virtual machines, and a scaling amount determining unit configured to determine a number of the virtual machines to be scaled. In this case, the traffic load measuring unit acquires a traffic load for each of the traffic types to be processed by each of the plurality of types of virtualized nodes, and the scaling amount determining unit determines the type of virtualized node for which virtual machines are to be scaled and a number of machines to be scaled based on the traffic loads of the traffic types.

US 2015/0222561 A1 discloses a scale-out of a gateway server that is realized according to a rapid increase in communication volume, without incurring system down. A high-quality communication is provided to priority users even during scaling out the gateway server. A high-quality communication is continuously provided to priority users without incurring the system down even if the scale-out/in of the gateway server is repeated. A bandwidth control apparatus transmits packets to plural virtual nodes equipped in a server device, reads the packets from any high priority queue and any low priority queue which are associated with the subject apparatus, and limits the packets to an upper limit bandwidth determined for each of the virtual nodes, and changes association of the high priority queues and the low priority queues with the virtual node bandwidth limiters according to an instruction from the control server for determining the scale-out/in of the virtual node.

WO 2015/126430 A1 discloses a method of managing virtual network functions for a network, the method including providing a virtual network function (VNF) including a number of virtual network function components (VNFCs) of a number of different types, each VNFC comprising a virtual machine (VM) executing application software. The method further includes creating for up to all VNFC types a number of deactivated VMs having application software, monitoring at least one performance level of the VNF, and scaling-out the VNF by activating a number of deactivated VMs of a number of VNFC types when the at least one performance level reaches a scale-out threshold.

### SUMMARY

Embodiments of this application provide an elastic scale-up method and system, and a device, to rapidly scale up an added node, so that the added node provides an external service promptly.

The invention is defined by a method according to claim 1, a cloud management device according to claim 6 and an execution device according to claim 7. Further embodiments are defined by the dependent claims.

Compared with the prior art, the solutions provided in the present invention can rapidly implement elastic scale-up of an execution device, so that the execution device can rapidly process a service request from an external network.

### BRIEF DESCRIPTION OF DRAWINGS

To describe the technical solutions in the embodiments of the present application more clearly, the following briefly introduces the accompanying drawings required for describing the embodiments. Apparently, the accompanying drawings in the following description show merely some embodiments of the present application, and persons of ordinary skill in the art may still derive other drawings from these accompanying drawings without creative efforts.
FIG. 1 is a schematic framework diagram of a possible elastic scale-up system according to an embodiment of the present invention;
FIG. 2 is a schematic diagram of a system according to an embodiment of the present invention;
FIG. 3 is a schematic diagram of a system according to an embodiment of the present invention;
FIG. 4 is a schematic diagram of a computer device according to an embodiment of the present invention;
FIG. 5 is a schematic diagram of a computer device according to an embodiment of the present invention;
FIG. 6 is a schematic flowchart of an elastic scale-up method according to an embodiment of the present invention;
FIG. 7 is a schematic structural diagram of a cloud management device according to an embodiment of the present invention; and
FIG. 8 is a schematic structural diagram of an execution device according to an embodiment of the present invention.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

A main principle of the present invention is as follows: When a cloud management device scales up a new execution device (or may be referred to as a node), before the execution device is successfully scaled up, that is, before a data routing table of each execution device is updated, the cloud management device sends an IP address of the new execution device to a load balancer, so that the new execution device may receive a service request allocated by the load balancer. When the execution device processes the service request, if a data module is required to process a process, the execution device still allocates the data module according to a previous data routing table. Therefore, elastic scale-up of the execution device is rapidly implemented, so that the execution device can rapidly process a service request from an external network.

First, some basic concepts in an elastic scale-up method in the embodiments of the present invention are described. Elastic scale-up may have multiple modes: a manual scale-up mode that is based on a decision of operation and maintenance personnel and in which an elastic scale-down operation for a resource is triggered by using an operation and maintenance device; a timing scale-up mode that is based on a time period and in which an elastic scale-up operation is regularly triggered; a service dynamic scale-up mode in which it is dynamically determined, based on a service monitoring performance indicator, whether to execute elastic scale-up on a service; and a hybrid mode in which elastic scale-up is triggered based on multiple complex conditions such as a time period and a monitoring performance indicator.

In elastic scale-up, a key performance indicator (KPI) includes a resource KPI and a service KPI. The resource KPI includes CPU usage, memory usage, remaining disk space, and a network adapter-related KPI. The resource KPI is predefined in a cloud system, and may not need to be configured. The service KPI includes a KPI, such as an average response time of service processing, defined according to a service function. The service KPI is defined by operation and maintenance personnel by using the cloud management device.

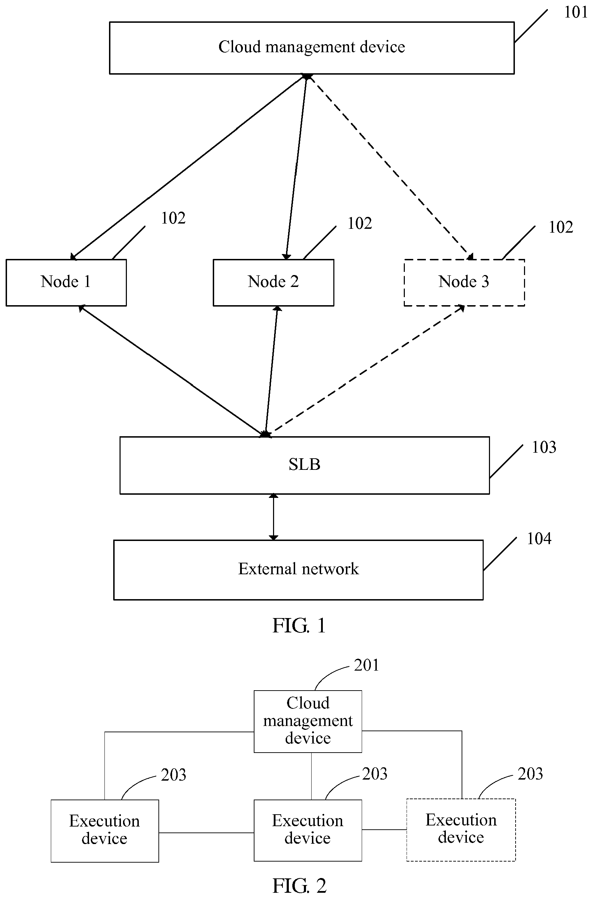

As shown in FIG. 1, a framework diagram of a simple elastic scale-up system according to an embodiment of the present invention includes: a cloud management device 101, at least one node 102, a load balancer (English full name: software load balancer, SLB for short) 103, and an external network 104. By using the cloud management device, operation and maintenance personnel may start a collection task, configure a scale-up policy, manually trigger elastic scale-up, and so on, so that the operation and maintenance personnel can manage and control a scale-up procedure. The cloud management device stores an elastic scale-up policy, and the elastic scale-up policy includes a pre-scale-up condition and a formal scale-up condition. Pre-scale-up means that when load of each execution device managed by the cloud management device is already a bit heavy, for example, exceeds the pre-scale-up condition, but is not excessively heavy (for example, does not exceed the formal scale-up condition), the cloud management device starts a new execution device in advance. Formal scale-up means that when load of each execution device managed by the cloud management device is already very heavy, for example, exceeds the formal scale-up condition, a started new execution device is connected to the load balancer, and the load balancer may allocate a service request to the new execution device. An objective of classifying elastic scale-up into the pre-scale-up and the formal scale-up is to rapidly scale up an execution device. The cloud management device is connected to multiple nodes, collects a performance indicator from each node, then determines, according to the stored elastic scale-up policy, whether to perform elastic scale-up, and if it is determined that elastic scale-up needs to be performed, executes a scale-up procedure, that is, starts a new node. Generally, the cloud management device belongs to a platform (platform, P) layer resource device in cloud computing.

In this embodiment of the present invention, the cloud management device determines, according to a resource scale-up policy, whether a current condition satisfies the pre-scale-up condition, and if the pre-scale-up condition is satisfied, starts an added node and allocates an Internet Protocol (IP) address to the added node. Herein, the starting an added node includes: creating a virtual machine environment, installing an operating system, and starting an application and a data module. After the node is started, the cloud management device determines, according to the resource scale-up policy, whether a current condition satisfies the formal scale-up condition, and if the formal scale-up condition is satisfied, sends the IP address of the added node to an SLB. In this way, the SLB may allocate, to the added node, a service request from an external network according to a load balancing algorithm. That is, the added node may provide an external service promptly. Moreover, the cloud management device further sends a scale-up notification to the added node. In this way, the added node may start, according to the scale-up notification, to initiate a record migration request to an existing node. When receiving a record migration request that is sent by the added node and that carries a data routing table after scale-up, the cloud management device sends the record migration request to the existing node for record migration. The data routing table after scale-up herein is not a currently active data routing table, and each node allocates a data module according to only a currently active data routing table. After a record on a node is successfully migrated, the node sends, to the cloud management device, a record migration success response. When the cloud management device receives record migration success responses of all existing nodes, it indicates that current data is successfully migrated, and the cloud management device sends a routing table update notification to all nodes including the existing nodes and the added node. In this way, each node changes the active data routing table from a data routing table before scale-up to the data routing table after scale-up. A data routing table includes a correspondence among a data module type, an index number, and an execution device identifier. When a node processes a service request, if a particular type of data module needs to be invoked, a data module of a particular node may be found by using the data routing table. After scale-up of a node, content in the data routing table changes, that is, a data module found by using the data routing table is different. Therefore, after scale-up of a node, a data routing table stored on each node needs to be updated, and the update is performed after record migration of the node is completed. In addition, for a data module, a record is made for each processing. After the content in the data routing table changes, it is possible that a record originally stored on a node needs to be stored on another node later. In this case, record migration needs to be performed.

The following further describes some technical content related to the present invention. A virtual machine environment, an operating system, various applications, and a data module are running on a node. Usually, an application is mainly used to parse a service request from an external network, and execute a service procedure corresponding to the service request. For example, the application is HTTP server software. Each node may start one or more applications, for example, an application 1 and an application 2. Usually, applications included in all nodes are the same. That is, service requests processed by all the nodes are the same. Therefore, the SLB may process the service request from the external network on any node. Specifically, an application may include a message processing module, a message bus, and a service logic processing module. The message processing module may process service requests in different message formats or protocols. For example, the message processing module is capable of processing a Session Initiation Protocol (Session Initiation Protocol, SIP) message, signaling system 7 (Signaling System 7, SS7) signaling, or a diameter (Diameter) protocol message. The service logic processing module may process service logic that is triggered by a service request sent by the external network. There are many types of services herein, for example, various types of services such as a charging service, a call processing service, and a short message service. No special limitation is imposed herein. The data module includes a lock (lock) module and a processing module. The data module herein is also referred to as a data service in some technical documents. The lock module provides a lock service for some service procedures. There are many types of locks, for example: a forward lock or a call lock, and some service logic is implemented by locking or unblocking a resource. A processing process of the lock module is further described in the following content. The processing module includes two functions: queue processing and resource allocation processing. A queue service means that a new service request is queued according to a specified priority policy when traffic is heavy. Usually, the queue service is used in an agent service scenario in a call center system. A resource allocation service may coordinate resource allocation among multiple services/calls for one public service/call. Before use of a public service/call resource, a resource is applied for first, and the resource is released after the use of the resource is finished. If there is no resource that can be applied for, the option is to wait or give up.

Active data routing tables maintained on all nodes are exactly the same. In this embodiment of the present invention, a data routing table is a table related to a relationship among a data module type, an index number (index), and an execution device identifier (ID). That is, the data routing table includes a correspondence among a data module type, an index number, and a node ID. According to an index number and a data module type, a node to which this type of data module belongs may be positioned. Specifically, when an application requires to trigger a particular type of data module to process service logic, an index number is determined by using an index number computing algorithm, and then a corresponding node is found in the data routing table by using the index number. This type of data module on the node is a data module that is allocated to process the service logic. Usually, the index number computing algorithm may be specifically a consistent hashing (hash) algorithm. In this case, hash lengths that further need to be maintained for all the nodes are the same, and the hash length is generally not allowed to be manually modified. Generally, the hash length is a quantity of virtual nodes in the consistent hashing algorithm.

For example, when two nodes are deployed and a hash length is 53, to implement load balancing of the two nodes, one node corresponds to 26 indexes, and the other node corresponds to 27 indexes. In this way, the following data is created. A module type herein includes lock and RMservice, where lock refers to a lock module, and RMservice refers to a processing module.

| Module type | Index number | Node ID |
|---|---|---|
| Lock | 0 | 1 |
| Lock | 1 | 2 |
| Lock | 2 | 1 |
| Lock | 3 | 2 |
| Lock | 4 | 1 |
| Lock | 5 | 2 |
| Lock | 6 | 1 |
| Lock | 7 | 2 |
| Lock | 8 | 1 |
| Lock | 9 | 2 |
| Lock | 10 | 1 |
| Lock | ... | ... |
| Lock | 51 | 1 |
| Lock | 52 | 2 |
| RMService | 0 | 1 |
| RMService | 1 | 2 |
| RMService | 2 | 1 |
| RMService | 3 | 2 |
| RMService | 4 | 1 |
| RMService | 5 | 2 |
| RMService | 6 | 1 |
| RMService | 7 | 2 |
| RMService | 8 | 1 |
| RMService | 9 | 2 |
| RMService | 10 | 1 |
| RMService | ... | ... |
| RMService | 51 | 1 |
| RMService | 52 | 2 |

A correspondence between an index and a node ID may be freely set according to a requirement, but should satisfy that a quantity of indexes corresponding to each node is balanced. For example, if there are two real nodes in the foregoing, and a quantity of indexes is 53, one real node corresponds to 26 or 27 indexes, to ensure that the quantity of indexes corresponding to each node is balanced. Specific indexes corresponding to a node 1 and specific indexes corresponding to a node 2 may be arbitrarily set. For example, 26 indexes ranked first correspond to the node 1, and the last 27 indexes correspond to the node 2; or odd-numbered indexes correspond to the node 1, and even-numbered indexes correspond to the node 2. If a quantity of real nodes changes, the correspondence between an index and a node ID needs to adjusted, to ensure that the quantity of indexes corresponding to each node is balanced. The foregoing example is still used for description. If there are three real nodes in this case, the node 1 may correspond to 17 or 18 indexes. Therefore, the quantity of indexes corresponding to the node 1 or the node 2 should be reduced by 8 or 9 correspondingly. In this case, in the correspondence, any eight or nine indexes corresponding to the node 1 may be changed to corresponding to a node 3. Alternatively, in the correspondence, eight or nine indexes corresponding to the node 1 that are ranked at the bottom are changed to corresponding to a node 3. In this embodiment of the present invention, before elastic scale-up, a data routing table stored on each node is a data routing table before scale-up, and in this case, the data routing table before scale-up is an active data routing table. In any case, only an active data routing table can be used to search for a data module.

After the foregoing data routing table is obtained, if any node receives a service request subsequently, an application parses the service request, and executes a service procedure corresponding to the service request. When the service procedure requires to invoke a particular type of data module to process a part of logic of the service procedure, the service request is converted into a key value (Key) according to a specified rule. Then a value of an index number is obtained by using the consistent hash algorithm, that is, a Key mod hash length, and a corresponding node ID is found by using the value of the index. In this way, this type of data module on a node corresponding to the node ID may be determined to perform a processing operation, for example, an operation such as locking or queuing, on the service procedure. The key corresponding to the service request may be a mobile phone number, a lock type plus a mobile phone number, a queue type plus a mobile phone number, resource allocation plus a mobile phone number, or the like. If the key is a string, the key may be converted into an Int value.

For example: a common scenario that uses a resource lock service is to recognize a repetitive calling and called procedure. For a call type service, a calling party and a called party each trigger a service processing procedure. In a call procedure of the calling party, to avoid repetitive charging of the call, a charging procedure of the call needs to be locked. In this case, a lock module needs to be used to lock the charging procedure. Therefore, a lock module on a particular node needs to be searched for by using a data routing table, to process the locking. It is assumed that a calling number and a called number are jointly used as a key value. A key mod hash length is computed to obtain an index. Then a node ID corresponding to a location of the lock module is found by using the index, and the lock module on the node corresponding to the node ID locks the charging procedure. After the charging procedure is successfully locked, the lock module stores this lock record, and the locking includes a lock type ID, a resource ID, a procedure ID, and a lock state. The lock type ID indicates a basic lock type, the resource ID may be information such as a mobile phone number, and the lock type ID and the resource ID are jointly used as the key. After receiving a service request, an application starts a session, and allocates a procedure ID to the session. The procedure ID uniquely indicates the session. It should be noted that each node stores only a lock record of the node, and does not store a lock record of another node. Therefore, the lock record is not global data. However, in a call procedure of the called party, a charging procedure may also be triggered. In this case, a lock module for processing a locking process is also searched for by using a data routing table. Therefore, similarly, the calling number and the called number are jointly used as a key value. A key mod hash length is computed to obtain an index. Then a node ID corresponding to a location of the lock module is found by using the index, and the lock module on the node corresponding to the node ID locks the charging procedure. Because key values used to search for lock modules are the same in the call procedure of the calling party and the call procedure of the called party, in the called party procedure, the lock module on the same node is determined according to the routing table. Therefore, the lock module first finds out, according to the key value, whether the lock module stores the lock record. Because the key values in the calling party procedure and the called party procedure are the same, the lock record is found finally. It indicates that the lock module on the node already locks the charging procedure. Therefore, the call procedure of the called party incurs a lock failure. In addition, it indicates that the called party fails to trigger a same charging procedure.

Similarly, the processing module also stores a queue record and a resource allocation record of a node of the processing module, and the queue record and the resource allocation record also include key values used for computing a routing table. The queue record records which keys are queued by the processing module, a queue start time, and other information, and the resource allocation record records which keys the processing module allocates resources to, which resources are allocated, and other information.

Still further, for convenience, the lock record, the queue record, and the resource allocation record each may further include an index value corresponding to each key. In this way, during subsequent record migration, data that needs to be migrated is determined relatively conveniently and quickly. It should be further noted that, when an application executes service logic triggered by a service request, the service logic may trigger one or more of a lock request, a queue request, or a resource allocation request. Alternatively, the service logic may not trigger any one of a lock request, a queue request, or a resource allocation request. That is, some service logic may need to be processed only by the application.

The foregoing describes content such as a data routing table and a data module that are used during processing of a service request. After scale-up of a node, content in the data routing table changes, that is, a data module found by using the data routing table is different. A further description is provided below.

Usually, a node is an I layer resource device in cloud computing. As shown in FIG. 1, it is assumed that in this embodiment of the present invention, there are two nodes before resource scale-up, which are the node 1 and the node 2 respectively. After the resource scale-up, the node 3 is started. Next, a process of performing elastic scale-up processing on an added node is described. The added node (the node 3) receives a scale-up notification sent by the cloud management device, and re-computes an active data routing table before scale-up, to obtain a data routing table after scale-up. In this case, the data routing table after scale-up is used for record migration. Then the node 3 sends, to the cloud management device, a record migration request that carries the data routing table after scale-up. After receiving the record migration request, the cloud management device sends the record migration request to all existing nodes (the node 1 and the node 2). After a record on each node is successfully migrated, the added node receives a routing table update notification sent by the cloud management device. Then, the added node changes the active data routing table from the data routing table before scale-up to the data routing table after scale-up. Before the active data routing table is changed from the data routing table before scale-up to the data routing table after scale-up, the added node may receive and process a service request allocated by the load balancer, but in this case, the added node still allocates a data module for the service request according to the data routing table before scale-up. After the active data routing table is changed from the data routing table before scale-up to the data routing table after scale-up, the added node may receive a service request allocated by the load balancer, but in this case, the added node allocates a data module for the service request according to the data routing table after scale-up.

For an existing node, for example, the node 1 or the node 2, the node 1 is used as an example of the existing node in the following description. When receiving the record migration request that is sent by the cloud management device and that carries the data routing table after scale-up, the node 1 determines, according to the data routing table after scale-up and the data routing table before scale-up, data of the node 1 that needs to be migrated, and then sends, to the added node, the data that needs to be migrated. The added node stores the data that needs to be migrated, to provide a data service. When all data that needs to be migrated is sent, a record migration success response is sent to the cloud management device, to notify the cloud management device that the node 1 already completes record migration. If data stored in a data module already includes an index, the node 1 compares the data routing table after scale-up with the data routing table before scale-up, to find out whether a node that corresponds to the index in the data module and that is in the data routing table after scale-up is consistent with a node that corresponds to the index in the data module and that is in the data routing table before scale-up. If the nodes are inconsistent, the indexes are correspondingly recorded as data that needs to be migrated, and the data that needs to be migrated is sent to the added node. The data includes mapping information of a critical resource processed by the data module, queue processing information, and resource allocation information. If data stored in a data module does not include an index, a key value of each record in the data is computed, to obtain an index number. The data routing table after scale-up and the data routing table before scale-up are compared, to find out whether a node that corresponds to the computed index number in the data routing table after scale-up is consistent with a node that corresponds to the computed index number in the data routing table before scale-up. If the nodes are inconsistent, the index numbers are correspondingly recorded as data that needs to be migrated, and the data that needs to be migrated is sent to the added node.

After receiving the routing table update notification sent by the cloud management device, the node 1 changes the active data routing table from the data routing table before scale-up to the data routing table after scale-up. Before the active data routing table is changed from the data routing table before scale-up to the data routing table after scale-up, the node 1 may further receive a service request allocated by the load balancer, and the node 1 still allocates a data module for the service request according to the data routing table before scale-up. After the active data routing table is changed from the data routing table before scale-up to the data routing table after scale-up, the node 1 receives a service request allocated by the load balancer, and then allocates a data module for the service request according to the data routing table after scale-up.

Still referring to FIG. 1, the SLB is connected to the at least one node, and the SLB is a load balancing dispatcher of the at least one node. The SLB receives all service requests of the external network 104, and the SLB dispatches, according to a load balancing policy, a service request to a particular node for processing. There may be multiple types of load balancing policies. In this embodiment of the present invention, a polling algorithm is used as an example for description. The solution provided in the present invention can rapidly implement elastic scale-up of an execution device, so that the execution device can rapidly process a service request from an external network.

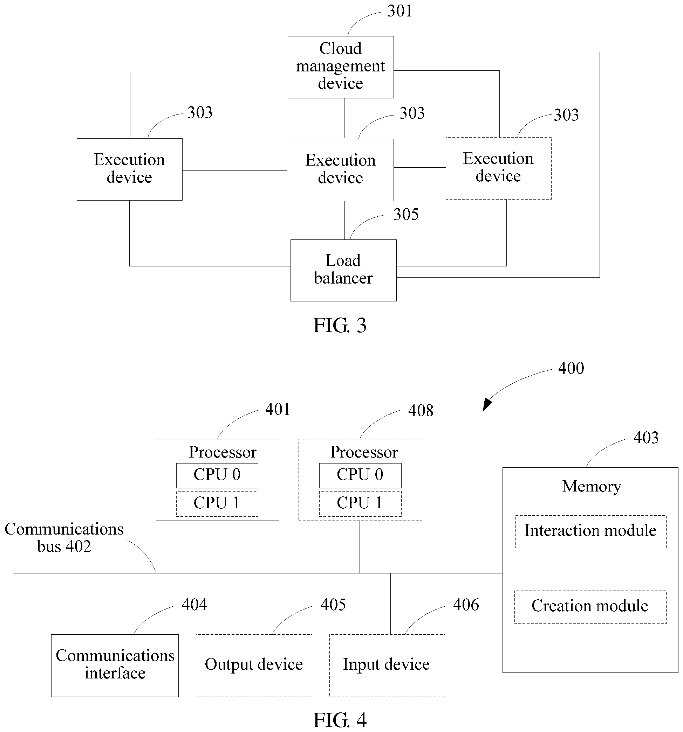

As shown in FIG. 2, an elastic scale-up system provided in the present invention may include a cloud management device 201 and at least one execution device 203. In FIG. 3, an execution device obtained through elastic scale-up is represented by using a dashed line. The system may be a system before elastic scale-up, or may be a system after elastic scale-up. An execution device may be the existing node 1 or the existing node 2 in FIG. 1, or may be the added node 3 in FIG. 1. This is not limited in the present invention.

As shown in FIG. 3, another elastic scale-up system provided in the present invention may include a cloud management device 301, a load balancer 305, and at least one execution device 303. The system may be a system before elastic scale-up, or may be a system after elastic scale-up. The at least one execution device 303 forms an execution device cluster, an execution device group, or the like. An execution device may be the existing node 1 or the existing node 2 in FIG. 1, or may be the added node 3 in FIG. 1. This is not limited in the present invention.

As shown in FIG. 4, the cloud management devices 201 and 301 in FIG. 2 and FIG. 3 may be implemented in a form of a computer device (or system) in FIG. 4.

FIG. 4 is a schematic diagram of a computer device according to an embodiment of the present invention. A computer device 400 includes at least one processor 401, a communications bus 402, a memory 403, and at least one communications interface 404.

The processor 401 may be a general-purpose central processing unit (CPU), a micro-processor, an application-specific integrated circuit (application-specific integrated circuit, ASIC), or one or more integrated circuits used to control execution of a program in a solution of the present invention. The communications bus 402 may include a path for transferring information between the foregoing components. The communications interface 404 uses any transceiver-type device to communicate with another device or a communications network, such as the Ethernet, a radio access network (RAN), and a wireless local area network (Wireless Local Area Networks, WLAN).

The memory 403 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a blu-ray disc, and the like), a magnetic disk storage medium, another magnetic storage device, or any other medium that can be configured to carry or store desired program code in a form of an instruction or a data structure and that is accessible to a computer, but is not limited thereto. The memory may exist independently, and is connected to the processor by using the bus. Alternatively, the memory may be integrated with the processor.

The memory 403 is configured to store application program code for executing the solutions in the present invention, and execution of the application program code is controlled by the processor 401. The processor 401 is configured to execute the application program code stored in the memory 403. In a specific implementation, in an embodiment, the processor 401 may include one or more CPUs, for example, a CPU 0 and a CPU 1 in FIG. 4.

In a specific implementation, in an embodiment, the computer device 400 may include multiple processors, for example, a processor 401 and a processor 408 in FIG. 4. Each of the processors may be a single-core (single-CPU) processor, or may be a multi-core (multi-CPU) processor. The processors herein may be one or more devices, circuits, and/or processing cores used to process data (for example, a computer program instruction).

In a specific implementation, in an embodiment, the computer device 400 may further include an output device 405 and an input device 406. The output device 405 communicates with the processor 401, and information may be displayed in multiple manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and input from a user may be received in multiple manners. For example, the input device 406 may be a mouse, a keyboard, a touchscreen device, or a sensor device.

The computer device 400 may be a general-purpose computer device or a special-purpose computer device. In a specific implementation, the computer device 400 may be a desktop computer, a portable computer, a network server, a palmtop computer (Personal Digital Assistant, PDA), a mobile phone, a tablet computer, a wireless terminal device, a communications device, an embedded device, or a device in a structure similar to that in FIG. 4. A type of the computer device 400 is not limited in this embodiment of the present invention.

The cloud management device in FIG. 2 may be the device shown in FIG. 4, and a memory of the cloud management device 201 stores one or more software modules (for example: a starting module and an interaction module). The cloud management device 201 may implement the software module by using a processor and program code in the memory, to implement elastic scale-up and service processing.

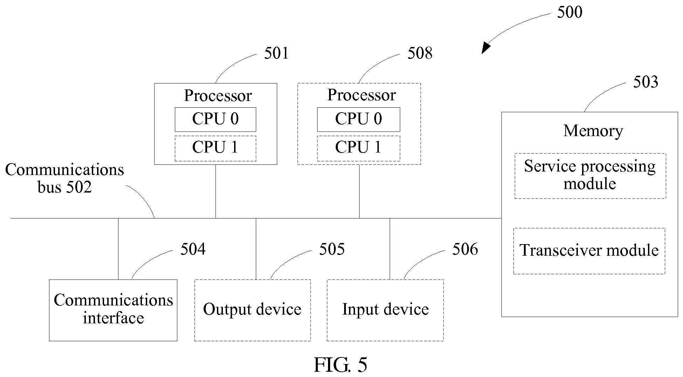

As shown in FIG. 5, the execution devices 203 and 303 in FIG. 2 and FIG. 3 may be implemented in a form of a computer device (or system) in FIG. 5. The computer device (or system) is the same as that described in FIG. 4.

The execution device in FIG. 2 or FIG. 3 may be the device shown in FIG. 5, and a memory of the execution device 203 or 303 stores one or more software modules (for example: a service processing module and a transceiver module). The execution device 203 or 303 may implement the software module by using a processor and program code in the memory, to implement elastic scale-up and service processing.

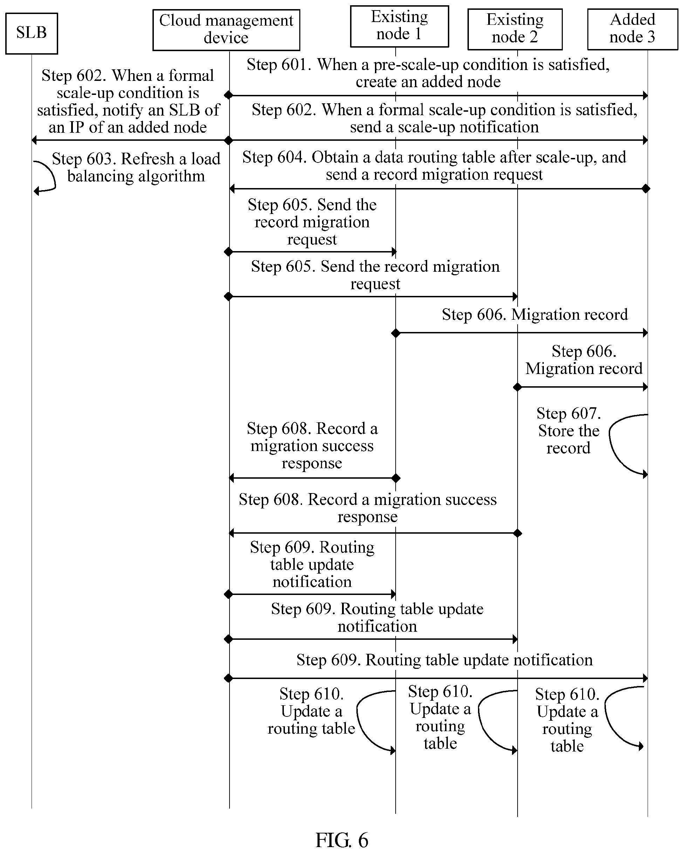

As shown in FIG. 6, FIG. 6 is a schematic flowchart of an elastic scale-up method according to an embodiment of the present invention. Herein, an example in which a node 1 and a node 2 are existing nodes, and a node 3 is a new scaled-up node is used for description. The elastic scale-up method includes the following steps.

Step 601: When a cloud management device determines, according to a resource scale-up policy, that a pre-scale-up condition is currently satisfied, the cloud management device applies for a resource, and starts an added node.

The cloud management device may scale up multiple nodes according to the resource scale-up policy, but only one node is used as an example herein for description. The following uses the node 3 as an example of the added node for description.

For example, the pre-scale-up condition herein is specifically that entire system CPU usage averaged on a node is greater than 40% and a quantity of nodes currently in a pre-scale-up state is less than 2. The entire system CPU usage averaged on a node is average CPU usage of all nodes managed by the cloud management device. A current specific pre-scale-up condition may be set according to an actual status.

For a process of starting the added node, refer to the description in the foregoing system framework. In this case, the node only starts an application, but an IP address of the node is not sent to a front-end SLB yet. Therefore, the front-end SLB is currently not triggered to deliver a message to the added node.

Step 602: When the cloud management device determines, according to the resource scale-up policy, that a formal scale-up condition is currently satisfied, the cloud management device sends an IP address of the node 3 to an SLB, and sends a scale-up notification to the node 3.

Usually, the formal scale-up condition is more stringent than the pre-scale-up condition, and the formal scale-up condition is based on the existence of a pre-scaled-up node. For example, the formal scale-up condition herein is that the entire system CPU usage averaged on a node is greater than 60%, and the quantity of nodes currently in a pre-scale-up state is greater than 0. Certainly, a scale-up condition is set according to an actual status.

The following step 603 describes an execution process of the SLB, and step 604 describes an execution process of the node 3. Step 603 and step 604 are not necessarily performed in a particular order.

Step 603: After the SLB receives the IP address of the node 3 sent by the cloud management device, the SLB determines that there are currently three nodes available to process a service request from an external network; therefore, the SLB refreshes a load balancing algorithm. For example, using a polling algorithm as an example, the node 3 is added to a polling list, and when a new service request is subsequently received, the service request may be sent to the node 3 according to the polling list.

Step 604: The node 3 receives the scale-up notification sent by the cloud management device and obtains a data routing table after scale-up, and the node 3 sends a record migration request to the cloud management device, where the record migration request includes the data routing table after scale-up.

As described in the system framework in FIG. 1, in this case, an active data routing table stored on each node is still a data routing table before scale-up, and each node also allocates, according to the data routing table before scale-up, a data module to process corresponding service logic. Because the node 3 already starts to be formally scaled up, and a data module of the node 3 is also about to run, a data routing table needs to be refreshed according to the node 3 added to a node cluster. That is, the data routing table after scale-up is obtained according to a data routing table update method described in the system framework in FIG. 1. However, in this case, the data routing table after scale-up is not activated yet, and a module is still allocated according to the data routing table before scale-up to process a corresponding service. For a same index, a node ID corresponding to the index in the data routing table after scale-up may be different from a node ID corresponding to the index in the data routing table before scale-up. For example, a node ID corresponding to the node 1 or the node 2 is changed to corresponding to the node 3.

After receiving the scale-up notification sent by the cloud management device, the node 3 may receive a service request sent by the SLB. For example, in this case, the SLB allocates a service request to the node 3. The node 3 receives the service request, and an application of the node 3 parses the service request, to trigger a service procedure corresponding to the service request. When the service procedure requires to invoke a particular type of data module to process a part of logic of the service procedure, and when lock processing or queue processing needs to be performed on the service request, the node 3 still allocates a data module according to the data routing table before scale-up. That is, processing is still performed by a data module of the node 1 or the node 2. Step 605: The cloud management device receives the record migration request sent by the node 3, and sends the record migration request to all nodes except the node 3, that is, sends the record migration request to all existing nodes.

Step 606: Each of the node 1 and the node 2 receives the record migration request sent by the cloud management device, determines a record corresponding to a migration index number stored on the node, and sends the record corresponding to the migration index number to the node 3. Herein, a node identifier that corresponds to the migration index number ina data routing table before migration is different from a node identifier that corresponds to the migration index number in the data routing table after migration. The record herein includes a lock record, a queue record, or a resource allocation record.

This process is described below by using the node 1, and an execution process of the node 2 is similar.

If each record in data already includes an index value, the node 1 compares the data routing table after scale-up with the data routing table before scale-up, to obtain a migration index number, and sends a record corresponding to the migration index number to the node 3.

If data does not include an index value, the node 1 computes a key value of each record in the data to obtain an index value. Then, the node 1 compares the data routing table after scale-up with the data routing table before scale-up, to obtain a migration index number, and sends a record corresponding to the migration index number to the node 3.

Step 607: The node 3 receives the record that is sent by the node 1 or the node 2 and that needs to be migrated, and stores the record that needs to be migrated.

Step 608: After all records on the node 1 or the node 2 that need to be migrated are migrated, the node 1 or the node 2 sends a record migration success response to the cloud management device. Step 609: When the cloud management device receives record migration success responses of all the nodes except the node 3, it indicates that the records are successfully migrated; therefore, the cloud management device sends a routing table update notification to all the nodes.

Step 610: After each node receives the routing table update notification, the node turns the data routing table after scale-up into an active data routing table. In this way, the whole scale-up process of the node 3 is completed, and in this case, the node 3 may process a service request as the node 1 or 2.

Step 611: After the node 1 or the node 2 sends the record corresponding to the migration index number to the node 3, and before the data routing table after scale-up is turned into the active data routing table, the node 1 and the node 2 still receive an external request sent by the SLB. In this case, if a record is generated when a data module of the node 1 or the node 2 performs processing, the record is referred to as an incremental record. In this case, after the data routing table after scale-up is turned into the active data routing table, the incremental record corresponding to the migration index number is sent to the node 3 according to the foregoing step 606.

In an incremental record synchronization period, to ensure data consistency, because the data routing table after scale-up is already activated and data received by the data module of the node 3 is not comprehensive, that is, no incremental record exists, if a part of logic trigger the data module of the node 3, such logic is directly rejected.

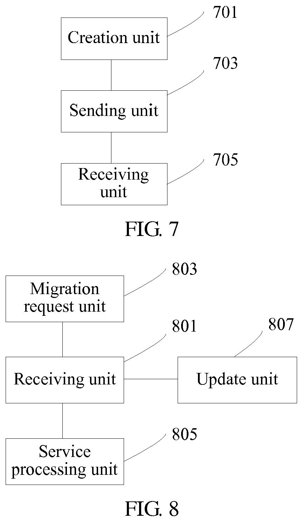

As shown in FIG. 7, an embodiment of the present invention further provides a schematic structural diagram of a cloud management device 700. The cloud management device 700 includes: a starting unit 701, a sending unit 703, and a receiving unit 705.

The starting unit 701 is configured to: when a pre-scale-up condition is satisfied, start an execution device, to allocate an Internet Protocol IP address to the execution device. The sending unit 703 is configured to: when a formal scale-up condition is satisfied, send the IP address of the execution device to a load balancer, so that the load balancer allocates, to the execution device, a service request from an external network according to a load balancing algorithm. The sending unit 703 is further configured to send a scale-up notification to the execution device, so that the execution device initiates a record migration request according to the scale-up notification. The receiving unit 705 is configured to receive a record migration request that is sent by the execution device and that carries a data routing table after scale-up. The sending unit 703 is further configured to send the record migration request to another execution device other than the execution device, so that the another execution device other than the execution device performs record migration. The receiving unit 705 is further configured to receive record migration success responses of all execution devices except the execution device. The sending unit 703 is further configured to send a routing table update notification to all the execution devices, so that each execution device changes an active data routing table from a data routing table before scale-up to the data routing table after scale-up.

In this embodiment, the cloud management device 700 is presented in a form of a functional unit. The "unit" herein may be an application-specific integrated circuit (application-specific integrated circuit, ASIC), a processor and a memory that execute one or more software or firmware programs, an integrated logic circuit, and/or another component that may provide the foregoing functions. In a simple embodiment, persons skilled in the art may conceive that the cloud management device 700 may be in the form shown in FIG. 4. The starting unit 701, the sending unit 703, and the receiving unit 705 may be implemented by using the processor and the memory in FIG. 4. Specifically, the starting unit 701 may be implemented by the processor by executing a starting module, and the sending unit 703 and the receiving unit 705 may be implemented by the processor by executing an interaction module.

As shown in FIG. 8, an embodiment of the present invention further provides a schematic structural diagram of an execution device 800. The execution device 800 includes: a receiving unit 801, a migration request unit 803, a service processing unit 805, and an update unit 807.

The receiving unit 801 is configured to: receive a scale-up notification sent by a cloud management device, and obtain a data routing table after scale-up. The data routing table after scale-up includes a correspondence among a data module type, an index number, and an execution device identifier that are of the execution device after scale-up. The migration request unit 803 is configured to send, to the cloud management device, a record migration request that carries the data routing table after scale-up, so that the cloud management device sends, to all execution devices except the execution device, the record migration request that carries the data routing table after scale-up. The receiving unit 801 is further configured to receive a service request sent by a load balancer. The service processing unit 805 is configured to: parse the service request, and execute a service procedure corresponding to the service request. Specifically, the service processing unit 805 may invoke applications installed on the execution device, to parse the service request, and execute the service procedure corresponding to the service request. In a process of executing the service procedure, when the service procedure requires to invoke a particular type of data module installed on the execution device, to process a part of logic of the service procedure, the particular type of data module is allocated according to an active data routing table, to process the part of the logic of the service procedure. The receiving unit 801 is further configured to receive a routing table update notification sent by the cloud management device. The update unit 807 is configured to change the active data routing table from a data routing table before scale-up to the data routing table after scale-up. The data routing table before scale-up includes a correspondence among a data module type, an index number, and an execution device identifier that are of the execution device before scale-up.

In this embodiment, the execution device 800 is presented in a form of a functional unit. The "unit" herein may be a specified ASIC, a processor and a memory that execute one or more software or firmware programs, an integrated logic circuit, and/or another device that may provide the foregoing functions. In a simple embodiment, persons skilled in the art may conceive that the execution device 800 may be in the form shown in FIG. 5. The receiving unit 801, the migration request unit 803, the service processing unit 805, and the update unit 807 may be implemented by using the processor and the memory in FIG. 5. Specifically, the receiving unit 801 may be implemented by the processor by executing a transceiver module. The migration request unit 803, the service processing unit 805, and the update unit 807 may be implemented by the processor by executing a service processing module.

An embodiment of the present invention further provides a computer storage medium, configured to store a computer software instruction used by the cloud management device shown in FIG. 8. The computer storage medium includes a program designed for executing the foregoing method embodiment. Elastic scale-up of an execution apparatus may be implemented by executing the stored program.

An embodiment of the present invention further provides another computer storage medium, configured to store a computer software instruction used by the execution device shown in FIG. 7. The computer storage medium includes a program designed for executing the foregoing method embodiment. Elastic scale-up of an execution apparatus may be implemented by executing the stored program.

Persons skilled in the art should understand that the embodiments of this application may be provided as a method, or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer usable program code.

The present application is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate a device for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction device. The instruction device implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present application have been described, persons skilled in the art can make changes and modifications to these embodiments once they learn the basic inventive concept. Therefore, the following claims are intended to be construed as to cover the preferred embodiments and all changes and modifications falling within the scope of the present application.

## Claims

1. An elastic scale-up method for a virtual resource in a cloud computing environment, comprising the following steps:
upon determining that a pre-scale-up condition is satisfied, starting (601), by a cloud management device, a first execution device, and allocating an Internet Protocol, IP, address to the first execution device, wherein the starting of the execution device comprises creating a virtual machine environment, installing an operating system, and starting an application and a data module;
upon determining that a formal scale-up condition is satisfied, sending (602), by the cloud management device, the IP address of the first execution device to a load balancer, and sending (604) a scale-up notification to the first execution device;
receiving, by the first execution device, a service request that is sent by the load balancer according to the IP address of the first execution device, parsing the service request, and executing a service procedure corresponding to the service request;
receiving (604), by the first execution device, the scale-up notification, and obtaining a data routing table after scale-up by re-computing a data routing table before scale-up, wherein said data routing table before scale-up is an active data routing table, and wherein an active data routing table is a table used by each executing device to determine an execution device identifier by using the type of the data module required to be invoked by the service procedure and an index obtained by hashing a key value to which the service request is converted, and wherein an entry in a data routing table includes a correspondence among a data module type, an index number, and an execution device identifier that are of an execution device;
sending (604), by the first execution device to the cloud management device, a record migration request that carries the data routing table after scale-up;
receiving (605), by the cloud management device, the record migration request, and sending the record migration request to another execution device;
receiving, by the execution device and from the plurality of execution devices, a record that is corresponding to a migration index number, wherein an execution device identifier that corresponds to the migration index number in a data routing table before scale-up is different from an execution device identifier that corresponds to the migration index number in the data routing table after scale-up, and the record comprises a lock record, a queue record, or a resource allocation record;
receiving (609), by the cloud management device, record migration success responses of the another execution device, and sending a routing table update notification to the first execution device and the another execution device; and
receiving (609), by each of the first execution device and the another execution device, the routing table update notification sent by the cloud management device, and changing the active data routing table from the data routing table before scale-up to the data routing table after scale-up.

2. The method according to claim 1, further comprising: when the service procedure requires to invoke a particular type of data module to process a part of logic of the service procedure, allocating, by the first execution device, the particular type of data module according to the data routing table before scale-up to process the part of the logic of the service procedure.

3. The method according to claim 1, wherein after the changing, by the first execution device, the active data routing table from the data routing table before scale-up to the data routing table after scale-up, the method further comprises:
receiving, by the first execution device, a service request allocated by the load balancer, parsing the service request, and executing a service procedure corresponding to the service request; and when the service procedure requires to invoke a particular type of data module to process a part of logic of the service procedure, allocating the particular type of data module according to the data routing table after scale-up to process the part of the logic of the service procedure.

4. The method according to claim 1, wherein after the receiving, by the first execution device, the routing table update notification sent by the cloud management device, the method further comprises:
receiving, by the first execution device, an incremental record that is corresponding to the migration index number and that is sent by the another execution device, wherein the incremental record is a record generated in a period that is after the first execution device receives the record that is corresponding to the migration index number and that is sent by the another execution device and that is before the first execution device receives the routing table update notification sent by the cloud management device.

5. The method according to claim 4, wherein in a period in which the first execution receives the incremental record that is corresponding to the migration index number and that is sent by the another execution device, the method further comprises: rejecting, by a data module of the first execution device or the another execution device, processing of a part of logic of the service procedure.

6. A cloud management device, comprising:
a starting unit (701), configured to: upon determining that a pre-scale-up condition is satisfied, start an execution device, and allocate an Internet Protocol, IP, address to the execution device, wherein the starting of the execution device comprises creating a virtual machine environment, installing an operating system, and starting an application and a data module;
a sending unit (703), configured to upon determining that a formal scale-up condition is satisfied, send the IP address of the execution device to a load balancer, so that the load balancer allocates, to the execution device, a service request from an external network according to the IP address of the execution device, wherein
the sending unit (703) is further configured to send a scale-up notification to the execution device, so that the execution device initiates a record migration request according to the scale-up notification; and
a receiving unit (705), configured to receive a record migration request that is sent by the execution device and that carries a data routing table after scale-up, and wherein an entry in a data routing table includes a correspondence among a data module type, an index number, and an execution device identifier that are of an execution device, wherein
the sending unit (703) is further configured to send the record migration request to another execution device other than the execution device, so that the another execution device other than the execution device performs record migration;
the receiving unit (705) is further configured to receive record migration success responses of all execution devices except the execution device; and
the sending unit (703) is further configured to send a routing table update notification to all the execution devices, so that each execution device changes an active data routing table from a data routing table before scale-up to the data routing table after scale-up, wherein an active data routing table is a table used by each executing device to determine an execution device identifier by using the type of the data module required to be invoked by the service procedure and an index obtained by hashing a key value to which the service request is converted.

7. An execution device, comprising:
a receiving unit (801), configured to: receive a scale-up notification sent by a cloud management device, and obtain a data routing table after scale-up by re-computing a data routing table before scale-up, wherein that data routing table before scale-up is an active data routing table, and wherein an active data routing table is a table used by each executing device to determine an execution device identifier by using the type of the data module required to be invoked by the service procedure and an index obtained by hashing a key value to which the service request is converted, and wherein an entry in a data routing table includes a correspondence among a data module type, an index number, and an execution device identifier that are of an execution device;
a migration request unit (803), configured to send, to the cloud management device, a record migration request that carries the data routing table after scale-up, wherein the record migration request is sent by the cloud management device, to a plurality of execution devices not comprising the execution device, wherein
the receiving unit (801) is further configured to receive from the plurality of execution devices a record that is corresponding to a migration index number, wherein an execution device identifier that corresponds to the migration index number in a data routing table before scale-up is different from an execution device identifier that corresponds to the migration index number in the data routing table after scale-up, and the record comprises a lock record, a queue record, or a resource allocation record, and wherein
the receiving unit (801) is further configured to receive a service request sent by a load balancer;
a service processing unit (805), configured to: parse the service request, and execute a service procedure corresponding to the service request, wherein
the receiving unit (801) is further configured to receive a routing table update notification sent by the cloud management device; and
an update unit (807), configured to change the active data routing table from the data routing table before scale-up to the data routing table after scale-up.

8. The device according to claim 7, wherein the service processing unit (805) is further configured to: when the service procedure requires to invoke a particular type of data module to process a part of logic of the service procedure, allocate the particular type of data module according to the data routing table before scale-up to process the part of the logic of the service procedure.

9. The device according to claim 7, wherein the service processing unit (805) is further configured to: after the active data routing table is changed from the data routing table before scale-up to the data routing table after scale-up, receive a service request allocated by the load balancer, parse the service request, and execute a service procedure corresponding to the service request; and when the service procedure requires to invoke a particular type of data module to process a part of logic of the service procedure, allocate the particular type of data module according to the data routing table after scale-up to process the part of the logic of the service procedure.

10. The device according to claim 7, wherein the receiving unit is further configured to: after receiving the routing table update notification sent by the cloud management device, receive an incremental record that is corresponding to the migration index number and that is sent by the another execution device, wherein the incremental record is a record generated by the another execution device after the record that is corresponding to the migration index number and that is sent by the another execution device is received and before the routing table update notification sent by the cloud management device is received.

11. The device according to claim 10, further comprising a rejection unit, configured to: in a period in which the incremental record that is corresponding to the migration index number and that is sent by the another execution device is received, reject processing of a part of logic of the service procedure.

12. A system for a virtual resource in a cloud computing environment, comprising the cloud management device according to claim 6 and the execution device according to any one of claims 7 to 11.

## Patentansprüche

1. Verfahren zum elastischen Hochskalieren für eine virtuelle Ressource in einer Cloud-Computing-Umgebung, das die folgenden Schritte aufweist:
Starten (601) einer ersten Ausführungsvorrichtung durch eine Cloud-Management-Vorrichtung und Zuweisen einer "Internet Protocol"-Adresse, IP-Adresse, zu der ersten Ausführungsvorrichtung, wenn bestimmt wird, dass eine Vor-Hochskalierungsbedingung erfüllt ist, wobei das Starten der Ausführungsvorrichtung das Erstellen einer virtuellen Maschinenumgebung, das Installieren eines Betriebssystems und das Starten einer Anwendung und eines Datenmoduls aufweist;
Senden (602) der IP-Adresse der ersten Ausführungsvorrichtung durch die Cloud-Management-Vorrichtung an einen Lastausgleicher und Senden (604) einer Hochskalierungsbenachrichtigung an die erste Ausführungsvorrichtung, wenn bestimmt wird, dass eine formale Hochskalierungsbedingung erfüllt ist;
Empfangen einer von dem Lastausgleicher gemäß der IP-Adresse der ersten Ausführungsvorrichtung gesendeten Dienstanforderung durch die erste Ausführungsvorrichtung, Analysieren der Dienstanforderung und Ausführen einer Dienstprozedur entsprechend der Dienstanforderung;
Empfangen (604) der Hochskalierungsbenachrichtigung durch die erste Ausführungsvorrichtung und Erhalten einer Datenweiterleitungstabelle nach Hochskalierung durch Neuberechnung einer Datenweiterleitungstabelle vor Hochskalierung, wobei die Datenweiterleitungstabelle vor Hochskalierung eine aktive Datenweiterleitungstabelle ist und wobei eine aktive Datenweiterleitungstabelle eine Tabelle ist, die von jeder Ausführungsvorrichtung verwendet wird, um eine Ausführungsvorrichtungskennung zu bestimmen, indem der Typ des Datenmoduls verwendet wird, der durch die Dienstprozedur aufgerufen werden soll, und ein Index, der durch Zerlegen eines Schlüsselwerts erhalten wird, in den die Dienstanforderung konvertiert wird, und wobei eine Eingabe in eine Datenweiterleitungstabelle eine Entsprechung unter einem Datenmodultyp, einer Indexnummer und einer Ausführungsvorrichtungskennung beinhaltet, die zu einer Ausführungsvorrichtung gehören;
Senden (604) einer Datensatzmigrationsanforderung, die die Datenweiterleitungstabelle nach Hochskalierung enthält, durch die erste Ausführungsvorrichtung an die Cloud-Management-Vorrichtung;
Empfangen (605) der Datensatzmigrationsanforderung durch die Cloud-Management-Vorrichtung und Senden der Datensatzmigrationsanforderung an eine andere Ausführungsvorrichtung;
Empfangen eines Datensatzes, der einer Migrationsindexnummer entspricht, durch die Ausführungsvorrichtung und von der Vielzahl von Ausführungsvorrichtungen, wobei eine Ausführungsvorrichtungskennung, die der Migrationsindexnummer in einer Datenweiterleitungstabelle vor Hochskalierung entspricht, sich von einer Ausführungsvorrichtungskennung unterscheidet, die der Migrationsindexnummer in einer Datenweiterleitungstabelle nach Hochskalierung entspricht, und der Datensatz einen Sperrdatensatz, einen Warteschlangendatensatz oder einen Ressourcenzuweisungsdatensatz aufweist;
Empfangen (609) von Datensatzmigrationserfolgsantworten der anderen Ausführungsvorrichtung durch die Cloud-Management-Vorrichtung und Senden einer Weiterleitungstabellen-Aktualisierungsbenachrichtigung an die erste Ausführungsvorrichtung und die andere Ausführungsvorrichtung; und
Empfangen (609) der von der Cloud-Management-Vorrichtung gesendeten Weiterleitungstabellen-Aktualisierungsbenachrichtigung durch sowohl die erste Ausführungsvorrichtung als auch die andere Ausführungsvorrichtung und Ändern der aktiven Datenweiterleitungstabelle von der Datenweiterleitungstabelle vor Hochskalierung in die Datenweiterleitungstabelle nach Hochskalierung.

2. Verfahren nach Anspruch 1, das darüber hinaus Folgendes aufweist: wenn die Dienstprozedur erfordert, dass ein bestimmter Typ von Datenmodul aufgerufen wird, um einen Teil der Logik der Dienstprozedur zu verarbeiten, Zuordnen des bestimmten Typs von Datenmodul gemäß der Datenweiterleitungstabelle vor Hochskalierung durch die erste Ausführungsvorrichtung, um den Teil der Logik der Dienstprozedur zu verarbeiten.

3. Verfahren nach Anspruch 1, wobei nach dem Ändern der aktiven Datenweiterleitungstabelle von der Datenweiterleitungstabelle vor Hochskalierung in die Datenweiterleitungstabelle nach Hochskalierung durch die erste Ausführungsvorrichtung das Verfahren darüber hinaus Folgendes aufweist:
Empfangen einer von dem Lastausgleicher zugewiesenen Dienstanforderung durch die erste Ausführungsvorrichtung, Analysieren der Dienstanforderung und Ausführen einer Dienstprozedur entsprechend der Dienstanforderung; und wenn die Dienstprozedur erfordert, dass ein bestimmter Typ von Datenmodul aufgerufen wird, um einen Teil der Logik der Dienstprozedur zu verarbeiten, Zuordnen des bestimmten Typs von Datenmodul gemäß der Datenweiterleitungstabelle nach Hochskalierung, um den Teil der Logik der Dienstprozedur zu verarbeiten.

4. Verfahren nach Anspruch 1, wobei nach dem Empfangen der von der Cloud-Management-Vorrichtung gesendeten Weiterleitungstabellen-Aktualisierungsbenachrichtigung durch die erste Ausführungsvorrichtung das Verfahren darüber hinaus Folgendes aufweist:
Empfangen eines inkrementellen Datensatzes, der der Migrationsindexnummer entspricht und von der anderen Ausführungsvorrichtung gesendet wird, durch die erste Ausführungsvorrichtung, wobei der inkrementelle Datensatz ein Datensatz ist, der in einem Zeitraum erzeugt wird, der nach dem Empfangen des Datensatzes, der der Migrationsindexnummer entspricht und von der anderen Ausführungsvorrichtung gesendet wird, durch die erste Ausführungsvorrichtung liegt und vor dem Empfangen der von der Cloud-Management-Vorrichtung gesendeten Weiterleitungstabellen-Aktualisierungsbenachrichtigung durch die erste Ausführungsvorrichtung liegt.

5. Verfahren nach Anspruch 4, wobei in einem Zeitraum, in dem die erste Ausführungsvorrichtung den inkrementellen Datensatz empfängt, der der Migrationsindexnummer entspricht und von der anderen Ausführungsvorrichtung gesendet wird, das Verfahren darüber hinaus Folgendes aufweist: Ablehnen des Verarbeitens eines Teils der Logik der Dienstprozedur durch ein Datenmodul der ersten Vorrichtung oder der anderen Ausführungsvorrichtung.

6. Cloud-Management-Vorrichtung, die Folgendes aufweist:
eine Starteinheit (701), ausgebildet zum: Starten einer Ausführungsvorrichtung und Zuweisen einer "Internet Protocol"-Adresse, IP-Adresse, zu der Ausführungsvorrichtung, wenn bestimmt wird, dass eine Vor-Hochskalierungsbedingung erfüllt ist, wobei das Starten der Ausführungsvorrichtung das Erstellen einer virtuellen Maschinenumgebung, das Installieren eines Betriebssystems und das Starten einer Anwendung und eines Datenmoduls aufweist;
eine Sendeeinheit (703), ausgebildet zum Senden der IP-Adresse der Ausführungsvorrichtung an einen Lastausgleicher, wenn bestimmt wird, dass eine formale Hochskalierungsbedingung erfüllt ist, damit der Lastausgleicher der Ausführungsvorrichtung eine Dienstanforderung von einem externen Netzwerk gemäß der IP-Adresse der Ausführungsvorrichtung zuweist, wobei
die Sendeeinheit (703) darüber hinaus zum Senden einer Hochskalierungsbenachrichtigung an die Ausführungsvorrichtung ausgebildet ist, damit die Ausführungsvorrichtung eine Datensatzmigrationsanforderung gemäß der Hochskalierungsbenachrichtigung einleitet; und
eine Empfangseinheit (705), ausgebildet zum Empfangen einer von der Ausführungsvorrichtung gesendeten Datensatzmigrationsanforderung, die die Datenweiterleitungstabelle nach Hochskalierung enthält, und wobei ein Eintrag in eine Datenweiterleitungstabelle eine Entsprechung unter einem Datenmodultyp, einer Indexnummer und einer Ausführungsvorrichtungskennung beinhaltet, die zu einer Ausführungsvorrichtung gehören, wobei
die Sendeeinheit (703) darüber hinaus zum Senden der Datensatzmigrationsanforderung an eine andere Ausführungsvorrichtung, die nicht der Ausführungsvorrichtung entspricht, ausgebildet ist, damit die andere Ausführungsvorrichtung, die nicht der Ausführungsvorrichtung entspricht, eine Datensatzmigration durchführt;
die Empfangseinheit (705) darüber hinaus zum Empfangen von Datensatzmigrationserfolgsantworten aller Ausführungsvorrichtungen außer der Ausführungsvorrichtung ausgebildet ist; und
die Sendeeinheit (703) darüber hinaus zum Senden einer Weiterleitungstabellen-Aktualisierungsbenachrichtigung an alle Ausführungsvorrichtungen ausgebildet ist, damit jede Ausführungsvorrichtung eine aktive Datenweiterleitungstabelle von einer Datenweiterleitungstabelle vor Hochskalierung in eine Datenweiterleitungstabelle nach Hochskalierung ändert, wobei eine aktive Datenweiterleitungstabelle eine Tabelle ist, die von jeder Ausführungsvorrichtung verwendet wird, um eine Ausführungsvorrichtungskennung zu bestimmen, indem der Typ des Datenmoduls verwendet wird, der durch die Dienstprozedur aufgerufen werden soll, und ein Index, der durch Zerlegen eines Schlüsselwerts erhalten wird, in den die Dienstanforderung konvertiert wird.

7. Ausführungsvorrichtung, die Folgendes aufweist:
eine Empfangseinheit (801), ausgebildet zum: Empfangen einer von einer Cloud-Management-Vorrichtung gesendeten Hochskalierungsbenachrichtigung und Erhalten einer Datenweiterleitungstabelle nach Hochskalierung durch Neuberechnung einer Datenweiterleitungstabelle vor Hochskalierung, wobei die Datenweiterleitungstabelle vor Hochskalierung eine aktive Datenweiterleitungstabelle ist und wobei eine aktive Datenweiterleitungstabelle eine Tabelle ist, die von jeder Ausführungsvorrichtung verwendet wird, um eine Ausführungsvorrichtungskennung zu bestimmen, indem der Typ des Datenmoduls verwendet wird, der durch die Dienstprozedur aufgerufen werden soll, und ein Index, der durch Zerlegen eines Schlüsselwerts erhalten wird, in den die Dienstanforderung konvertiert wird, und wobei eine Eingabe in eine Datenweiterleitungstabelle eine Entsprechung unter einem Datenmodultyp, einer Indexnummer und einer Ausführungsvorrichtungskennung beinhaltet, die zu einer Ausführungsvorrichtung gehören;
eine Migrationsanforderungseinheit (803), ausgebildet zum Senden einer Datensatzmigrationsanforderung, die die Datenweiterleitungstabelle nach Hochskalierung enthält, an die Cloud-Management-Vorrichtung, wobei
die Datensatzmigrationsanforderung von der Cloud-Management-Vorrichtung an eine Vielzahl von Ausführungsvorrichtungen gesendet wird, die nicht die Ausführungsvorrichtung beinhaltet, wobei
die Empfangseinheit (801) darüber hinaus zum Empfangen eines Datensatzes, der einer Migrationsindexnummer entspricht, von der Vielzahl von Ausführungsvorrichtungen ausgebildet ist, wobei eine Ausführungsvorrichtungskennung, die der Migrationsindexnummer in einer Datenweiterleitungstabelle vor Hochskalierung entspricht, sich von einer Ausführungsvorrichtungskennung unterscheidet, die der Migrationsindexnummer in einer Datenweiterleitungstabelle nach Hochskalierung entspricht, und der Datensatz einen Sperrdatensatz, einen Warteschlangendatensatz oder einen Ressourcenzuweisungsdatensatz aufweist und wobei
die Empfangseinheit (801) darüber hinaus zum Empfangen einer von einem Lastausgleicher gesendeten Dienstanforderung ausgebildet ist;
eine Dienstverarbeitungseinheit (805), ausgebildet zum: Analysieren der Dienstanforderung und Ausführen einer Dienstprozedur, die der Dienstanforderung entspricht, wobei die Empfangseinheit (801) darüber hinaus zum Empfangen einer von der Cloud-Management-Vorrichtung gesendeten Weiterleitungstabellen-Aktualisierungsbenachrichtigung ausgebildet ist; und
eine Aktualisierungseinheit (807), ausgebildet zum Ändern der aktiven Datenweiterleitungstabelle von der Datenweiterleitungstabelle vor Hochskalierung in die Datenweiterleitungstabelle nach Hochskalierung.

8. Vorrichtung nach Anspruch 7, wobei die Verarbeitungseinheit (805) darüber hinaus ausgebildet ist zum: Zuordnen des bestimmten Typs von Datenmodul gemäß der Datenweiterleitungstabelle vor Hochskalierung, um den Teil der Logik der Dienstprozedur zu verarbeiten, wenn die Dienstprozedur erfordert, dass ein bestimmter Typ von Datenmodul aufgerufen wird, um einen Teil der Logik der Dienstprozedur zu verarbeiten.

9. Vorrichtung nach Anspruch 7, wobei die Verarbeitungseinheit (805) darüber hinaus ausgebildet ist zum: Empfangen einer von dem Lastausgleicher zugewiesenen Dienstanforderung, Analysieren der Dienstanforderung und Ausführen einer Dienstprozedur entsprechend der Dienstanforderung, nachdem die aktive Datenweiterleitungstabelle von der Datenweiterleitungstabelle vor Hochskalierung in die Datenweiterleitungstabelle nach Hochskalierung geändert wurde; und wenn die Dienstprozedur erfordert, dass ein bestimmter Typ von Datenmodul aufgerufen wird, um einen Teil der Logik der Dienstprozedur zu verarbeiten, Zuordnen des bestimmten Typs von Datenmodul gemäß der Datenweiterleitungstabelle nach Hochskalierung, um den Teil der Logik der Dienstprozedur zu verarbeiten.

10. Vorrichtung nach Anspruch 7, wobei die Empfangseinheit darüber hinaus konfiguriert ist zum: Empfangen eines inkrementellen Datensatzes, der der Migrationsindexnummer entspricht und von der anderen Ausführungsvorrichtung gesendet wird, nach Empfangen der von der Cloud-Management-Vorrichtung gesendeten Weiterleitungstabellen-Aktualisierungsbenachrichtigung, wobei der inkrementelle Datensatz ein Datensatz ist, der von der anderen Ausführungsvorrichtung erzeugt wird, nachdem der Datensatz, der der Migrationsindexnummer entspricht und von der anderen Ausführungsvorrichtung gesendet wird, empfangen wurde und bevor die von der Cloud-Management-Vorrichtung gesendete Weiterleitungstabellen-Aktualisierungsbenachrichtigung empfangen wird.

11. Vorrichtung nach Anspruch 10, die darüber hinaus eine Ablehnungseinheit aufweist, ausgebildet zum: Ablehnen des Verarbeitens eines Teils der Logik der Dienstprozedur in einem Zeitraum, in dem der inkrementelle Datensatz, der der Migrationsindexnummer entspricht und von der anderen Ausführungsvorrichtung gesendet wird, empfangen wird.

12. System für eine virtuelle Ressource in einer Cloud-Computing-Umgebung, das die Cloud-Management-Vorrichtung gemäß Anspruch 6 und die Ausführungsvorrichtung gemäß einem der Ansprüche 7 bis 11 aufweist.

## Revendications

1. Procédé de mise à l'échelle élastique destiné à une ressource virtuelle dans un environnement informatique en nuage, comprenant les étapes suivantes :
lors de la détermination qu'une condition de mise à l'échelle préalable est satisfaite, démarrer (601), par un dispositif de gestion en nuage, un premier dispositif d'exécution, et attribuer une adresse de protocole Internet, IP, au premier dispositif d'exécution, le démarrage du dispositif d'exécution comprenant la création d'un environnement de machine virtuelle, l'installation d'un système d'exploitation et le démarrage d'une application et d'un module de données ;
lors de la détermination qu'une condition de mise à l'échelle formelle est satisfaite, envoyer (602), par le dispositif de gestion en nuage, l'adresse IP du premier dispositif d'exécution à un équilibreur de charge, et envoyer (604) une notification de mise à l'échelle au premier dispositif d'exécution ;
recevoir, par le premier dispositif d'exécution, une requête de service qui est envoyée par l'équilibreur de charge en fonction de l'adresse IP du premier dispositif d'exécution, analyser la requête de service et exécuter une procédure de service correspondant à la requête de service ;
recevoir (604), par le premier dispositif d'exécution, la notification de mise à l'échelle, et obtenir une table de routage de données après la mise à l'échelle en recalculant une table de routage de données avant la mise à l'échelle, ladite table de routage de données avant la mise à l'échelle étant une table de routage de données active, et une table de routage de données active étant une table utilisée par chaque dispositif d'exécution pour déterminer un identifiant de dispositif d'exécution en utilisant le type de module de données requis devant être invoqué par la procédure de service et un indice obtenu en hachant une valeur clé à laquelle la requête de service est convertie, et une entrée dans une table de routage de données comprenant une correspondance parmi un type de module de données, un nombre d'indices et un identifiant de dispositif d'exécution qui proviennent d'un dispositif d'exécution ;
envoyer (604), par le premier dispositif d'exécution au dispositif de gestion en nuage, une requête de migration d'enregistrement qui achemine la table de routage de données après la mise à l'échelle ;
recevoir (605), par le dispositif de gestion en nuage, la requête de migration d'enregistrement et envoyer la requête de migration d'enregistrement à un autre dispositif d'exécution ;
recevoir, par le dispositif d'exécution et en provenance de la pluralité de dispositifs d'exécution, un enregistrement qui correspond à un nombre d'indices de migration, un identifiant de dispositif d'exécution qui correspond au nombre d'indices de migration dans une table de routage de données avant la mise à l'échelle étant différent d'un identifiant de dispositif d'exécution qui correspond au nombre d'indices de migration dans la table de routage de données après la mise à l'échelle, et l'enregistrement comprend un enregistrement de verrouillage, un enregistrement de file d'attente ou un enregistrement d'attribution de ressources ;
recevoir (609), par le dispositif de gestion en nuage, des réponses de succès de la migration d'enregistrement de l'autre dispositif d'exécution, et envoyer une notification de mise à jour de table de routage au premier dispositif d'exécution et à l'autre dispositif d'exécution ; et
recevoir (609) par chacun du premier dispositif d'exécution et de l'autre dispositif d'exécution, la notification de mise à jour de table de routage envoyée par le dispositif de gestion en nuage, et passer la table de routage de données active de la table de routage de données avant la mise à l'échelle à la table de routage de données après la mise à l'échelle.

2. Procédé selon la revendication 1, comprenant en outre : lorsque la procédure de service nécessite d'invoquer un type particulier de module de données pour traiter une partie d'une logique de la procédure de service, attribuer, par le premier dispositif d'exécution, le type particulier du module de données en fonction de la table de routage de données avant la mise à l'échelle pour traiter la partie de la logique de la procédure de service.

3. Procédé selon la revendication 1, après le passage, par le premier dispositif d'exécution, de la table de routage de données active de la table de routage de données avant la mise à l'échelle à la table de routage de données après la mise à l'échelle, le procédé comprenant en outre :
la réception, par le premier dispositif d'exécution, d'une requête de service attribuée par l'équilibreur de charge, l'analyse de la requête de service et l'exécution d'une procédure de service correspondant à la requête de service ; et lorsque la procédure de service nécessite d'invoquer un type particulier de module de données pour traiter une partie d'une logique de la procédure de service, attribuer le type particulier du module de données en fonction de la table de routage de données après la mise à l'échelle pour traiter la partie de la logique de la procédure de service.

4. Procédé selon la revendication 1, après la réception, par le premier dispositif d'exécution, de la notification de mise à jour de table de routage envoyée par le dispositif de gestion en nuage, le procédé comprenant en outre :
la réception, par le premier dispositif d'exécution, d'un enregistrement incrémentiel qui correspond au nombre d'indices de migration et qui est envoyé par l'autre dispositif d'exécution, l'enregistrement incrémentiel étant un enregistrement généré dans une période qui se situe après que le premier dispositif d'exécution a reçu l'enregistrement qui correspond au nombre d'indices de migration et qui est envoyé par l'autre dispositif d'exécution et qui se situe avant que le premier dispositif d'exécution reçoive la notification de mise à jour de table de routage envoyée par le dispositif de gestion en nuage.

5. Procédé selon la revendication 4, dans lequel dans une période dans laquelle la première exécution reçoit l'enregistrement incrémentiel qui correspond au nombre d'indices de migration et qui est envoyé par l'autre dispositif d'exécution, le procédé comprend en outre : le rejet, par un module de données du premier dispositif d'exécution ou de l'autre dispositif d'exécution, du traitement d'une partie d'une logique de la procédure de service.

6. Dispositif de gestion en nuage, comprenant :
une unité de démarrage (701), conçue pour : lors de la détermination qu'une condition de mise à l'échelle préalable est satisfaite, démarrer un dispositif d'exécution, et attribuer une adresse de protocole Internet, IP, au dispositif d'exécution, le démarrage du dispositif d'exécution comprenant la création d'un environnement de machine virtuelle, l'installation d'un système d'exploitation et le démarrage d'une application et d'un module de données ;
une unité d'envoi (703), conçue pour, lors de la détermination qu'une condition de mise à l'échelle formelle est satisfaite, envoyer l'adresse IP du dispositif d'exécution à un équilibreur de charge, de sorte que l'équilibreur de charge attribue, au dispositif d'exécution, une requête de service provenant d'un réseau externe en fonction de l'adresse IP du dispositif d'exécution, dans lequel
l'unité d'envoi (703) est conçue en outre pour envoyer une notification de mise à l'échelle au dispositif d'exécution, de sorte que le dispositif d'exécution initie une requête de migration d'enregistrement en fonction de la notification de mise à l'échelle ; et
une unité de réception (705), conçue pour recevoir une requête de migration d'enregistrement qui est envoyée par le dispositif d'exécution et qui achemine une table de routage de données après la mise à l'échelle, et une entrée dans une table de routage de données comprenant une correspondance parmi un type de module de données, un nombre d'indices et un identifiant de dispositif d'exécution qui proviennent d'un dispositif d'exécution, dans lequel
l'unité d'envoi (703) est conçue en outre pour envoyer la requête de migration d'enregistrement à un autre dispositif d'exécution autre que le dispositif d'exécution, de sorte que l'autre dispositif d'exécution autre que le dispositif d'exécution effectue une migration d'enregistrement ;
l'unité de réception (705) est conçue en outre pour recevoir des réponses de succès de migration d'enregistrement de tous les dispositifs d'exécution à l'exception du dispositif d'exécution ; et
l'unité d'envoi (703) est conçue en outre pour envoyer une notification de mise à jour de table de routage à tous les dispositifs d'exécution, de sorte que chaque dispositif d'exécution passe une table de routage de données active d'une table de routage de données avant la mise à l'échelle à la table de routage de données après la mise à l'échelle, une table de routage de données active étant une table utilisée par chaque dispositif d'exécution pour déterminer un identifiant de dispositif d'exécution en utilisant le type du module de données requis devant être invoqué par la procédure de service et un indice obtenu en hachant une valeur clé à laquelle la requête de service est convertie.

7. Dispositif d'exécution, comprenant :
une unité de réception (801), conçue pour : recevoir une notification de mise à l'échelle envoyée par un dispositif de gestion en nuage, et obtenir une table de routage de données après la mise à l'échelle en recalculant une table de routage de données avant la mise à l'échelle, la table de routage de données avant la mise à l'échelle étant une table de routage de données active, et une table de routage de données active étant une table utilisée par chaque dispositif d'exécution pour déterminer un identifiant de dispositif d'exécution en utilisant le type du module de données requis devant être invoqué par la procédure de service et un indice obtenu en hachant une valeur clé à laquelle la requête de service est convertie, et une entrée dans une table de routage de données comprenant une correspondance parmi un type de module de données, un nombre d'indices et un identifiant de dispositif d'exécution qui proviennent d'un dispositif d'exécution ;
une unité de requête de migration (803), conçue pour envoyer, au dispositif de gestion en nuage, une requête de migration d'enregistrement qui achemine la table de routage de données après la mise à l'échelle, la requête de migration d'enregistrement étant envoyée par le dispositif de gestion en nuage à une pluralité de dispositifs d'exécution ne comprenant pas le dispositif d'exécution, dans lequel
l'unité de réception (801) est conçue en outre pour recevoir, en provenance de la pluralité de dispositifs d'exécution, un enregistrement qui correspond à un nombre d'indices de migration, un identifiant de dispositif d'exécution qui correspond au nombre d'indices de migration dans une table de routage de données avant la mise à l'échelle est différent d'un identifiant de dispositif d'exécution qui correspond au nombre d'indices de migration dans la table de routage de données après la mise à l'échelle, et l'enregistrement comprend un enregistrement de verrouillage, un enregistrement de file d'attente ou un enregistrement d'attribution de ressources, et dans lequel
l'unité de réception (801) est conçue en outre pour recevoir une requête de service envoyée par un équilibreur de charge ;
une unité de traitement de service (805), conçue pour : analyser la requête de service, et exécuter une procédure de service correspondant à la requête de service, dans lequel l'unité de réception (801) est conçue en outre pour recevoir une notification de mise à jour de table de routage envoyée par le dispositif de gestion en nuage ; et
une unité de mise à jour (807), conçue pour passer la table de routage de données active de la table de routage de données avant la mise à l'échelle à la table de routage de données après la mise à l'échelle.

8. Dispositif selon la revendication 7, dans lequel l'unité de traitement de service (805) est conçue en outre pour : lorsque la procédure de service nécessite d'invoquer un type particulier de module de données pour traiter une partie d'une logique de la procédure de service, attribuer le type particulier du module de données en fonction de la table de routage de données avant la mise à l'échelle pour traiter la partie de la logique de la procédure de service.

9. Dispositif selon la revendication 7, dans lequel l'unité de traitement de service (805) est conçue en outre pour : après que la table de routage de données active est passée de la table de routage de données avant la mise à l'échelle à la table de routage de données après la mise à l'échelle, recevoir une requête de service attribuée par l'équilibreur de charge, analyser la requête de service et exécuter une procédure de service correspondant à la requête de service ; et lorsque la procédure de service nécessite d'invoquer un type particulier de module de données pour traiter une partie d'une logique de la procédure de service, attribuer le type particulier de module de données en fonction de la table de routage de données après la mise à l'échelle pour traiter la partie de la logique de la procédure de service.

10. Dispositif selon la revendication 7, dans lequel l'unité de réception est conçue en outre pour : après la réception de la notification de mise à jour de table de routage envoyée par le dispositif de gestion en nuage, recevoir un enregistrement incrémentiel qui correspond au nombre d'indices de migration et qui est envoyé par l'autre dispositif d'exécution, l'enregistrement incrémentiel étant un enregistrement généré par l'autre dispositif d'exécution après que l'enregistrement qui correspond au nombre d'indices de migration et qui est envoyé par l'autre dispositif d'exécution est reçu et avant que la notification de mise à jour de table de routage envoyée par le dispositif de gestion en nuage soit reçue.

11. Dispositif selon la revendication 10, comprenant en outre une unité de rejet, conçue pour : dans une période dans laquelle l'enregistrement incrémentiel qui correspond au nombre d'indices de migration et qui est envoyé par l'autre dispositif d'exécution est reçu, rejeter le traitement d'une partie d'une logique de la procédure de service.

12. Système destiné à une ressource virtuelle dans un environnement informatique en nuage, comprenant le dispositif de gestion en nuage selon la revendication 6 et le dispositif d'exécution selon l'une quelconque des revendications 7 à 11.
